# EUROPÄISCHE PATENTSCHRIFT

(11) **EP 0 556 589 B1**
(45) Veröffentlichungstag und Bekanntmachung des Hinweises auf die Patenterteilung: **13.03.1996**
(21) Anmeldenummer: 93100985.6
(22) Anmeldetag: 22.01.1993
(51) Int. Cl.: H01R 39/06, H02K 9/06, H02K 7/14

(54) **Elektrischer Universalmotor**
Universal electromotor
Electromoteur universel

(30) Priorität: 15.02.1992 DE 4204626
(43) Veröffentlichungstag der Anmeldung: 25.08.1993
(73) Patentinhaber: PIERBURG GMBH, D-41460 Neuss (DE)
(72) Erfinder: Teubel, Jens, O-7305 Waldheim (DE); Freitag, Armin, O-7302 Hartha (DE); Lazitis, Manfred, O-7305 Waldheim (DE); Weller, Wolfgang, O-7321 Gersdorf (DE)

(56) Entgegenhaltungen:
- EP-A- 0 078 417
- AT-B- 318 059
- DE-A- 4 107 962
- GB-A- 679 492
- GB-A- 783 733
- US-A- 3 659 170

## Beschreibung

Die Erfindung betrifft einen elektrischen Universalmotor nach dem Oberbegriff des Anspruchs 1.

Derartige Motoren (DE-C1 37 44 488) werden für Antriebe verwendet, insbesondere für Heimwerkzeuge und Küchenmaschinen, bei denen ein geräuscharmer Motorlauf, ein großes Motorantriebsmoment und ein geringes Gewicht angestrebt wird.

Aus der AT-PS 17 26 43 ist es bekannt, bei Elektromotoren mit feststehendem Polsystem, das innerhalb eines schwungradartig ausgebildeten Läufers angeordnet ist, den Kommutator mit Innenschleiffläehe auszubilden, wobei der Kommutator an der Innenseite des für die Ankerstirnverbindung vorgesehenen Wicklungsträger sitzt.

Der Erfindung liegt deshalb die Aufgabe zugrunde, bei einem gattungsgemäßen Universalmotor durch besondere Anordnung und Gestaltung der für einen Elektromotor typischen Bauteile und Baugruppen, eine extrem flache äußere Geometrie des Motors zu erreichen. Dabei sollen die Motoren mit 50Hz oder 60Hz Lichtnetzen ohne besondere Vorkehrungen betrieben werden können. Sie sollen dem Einsatzgebiet entsprechend eine hohe wartungsfreie Betriebszeit besitzen. Der Aufbau des Motors muß den Einsatz moderner Fertigungsverfahren ermöglichen, und er soll eine hohe thermische Überlastbarkeit besitzen.

Diese Aufgabe ist mit den im Kennzeichen des Anspruchs 1 angegebenen Merkmalen gelöst worden. Merkmale vorteilhafter Weiterbildungen sind mit den Unteransprüchen angebenen.

Mit der Erfindung erreichbare Vorteile sind in der nachfolgenden Beschreibung eines Ausführungsbeispiels angegeben, das in der Zeichnung dargestellt ist.

Diese zeigt:
Fig. 1
einen erfindungsgemäßen Universalmotor im Längsschnitt;
Fig. 2
im Querschnitt;
Fig. 3, Fig. 3a
ein Einzelteil;
Fig. 4 und 5
Teilansichten.

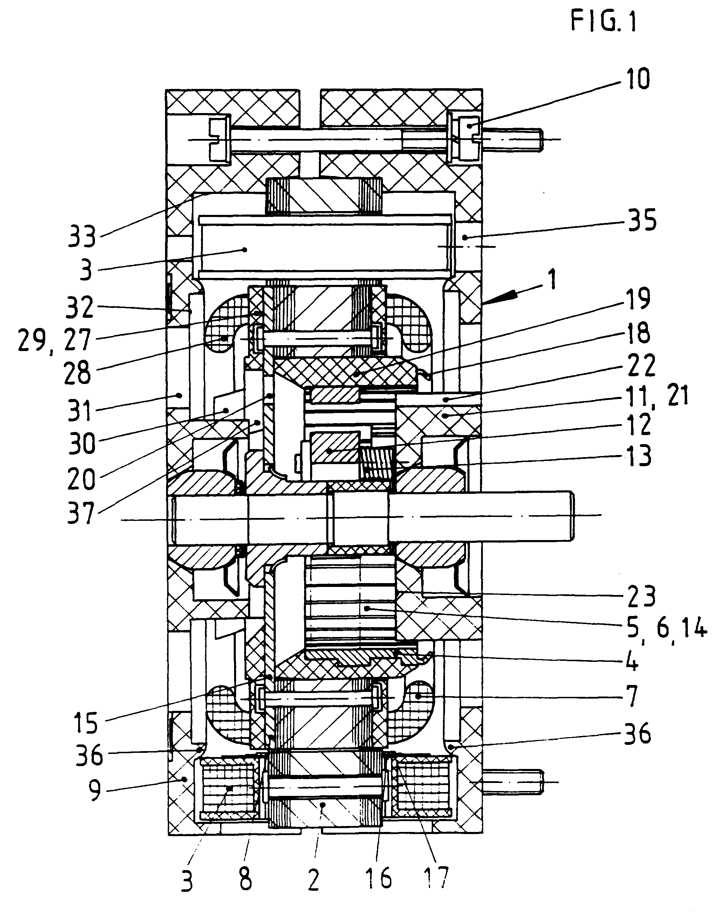

Die Fig. 1 zeigt einen erfindungsgemäßen Universalmotor 1 mit einem Statorring 2 und Statorwicklungen 3 sowie einen drehbar gelagerten Läufer 4 mit einem Kommutator 5, dessen Lamellen 6 in axialer Richtung verlaufen und symmetrisch am Innenumfang liegen und mit entsprechenden Läuferwicklungen 7 verbunden sind, die im Inneren eines den Läufer 4 bildenden napfförmigen Wicklungskorbes 8 angeordnet sind. Läufer 4 und Statorring 2 sind von einem geteilten Gehäuse 9 aufgenommen, das durch Schraubverbindungen 10 zusammengehalten ist.

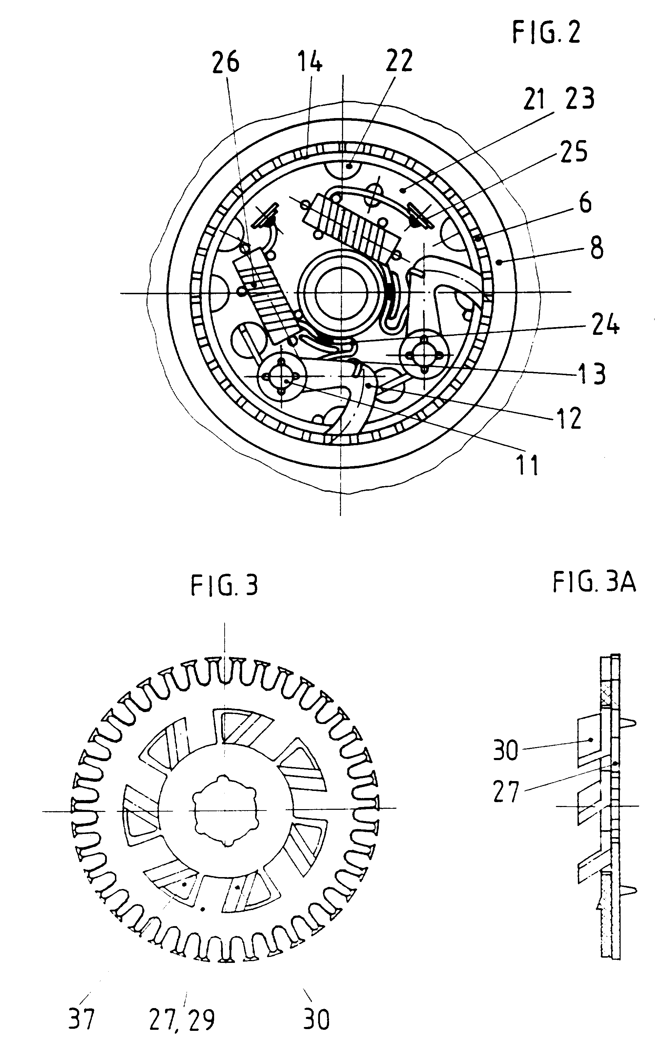

Auf einer in das Innere des Wicklungskorbes 8 hineinragenden Kohlehalterung 11 sind klinkenförmig ausgebildete Kohlebürsten 12 angeordnet, wie aus Fig. 2 erkennbar ist, die durch Biegefedern 13 gegen die Innenlauffläche des Kommutators 5 gedrückt werden, und zwar ist der Bürstendruck nach außen gerichtet.

Die Stirnwand 15 des Wicklungskorbes 8 ist lüfterradförmig ausgebildet, wie später noch erläutert wird. Die Wicklungen 3 des Statorringes 2 sind gegenüber dem Wicklungskorb 8 des Läufers 4 durch auf die Statorkerne aufgeschobene Abdeckfolien 16 geschützt, wobei diese durch durch die Statorkerne gepreßte Stifte 17 gesichert sind.

Die erfindungsgemäße Ausführung ermöglicht einen extrem flachen Aufbau des Motors.
Der einen verhältnismäßig großen Außendurchmesser aufweisende Wicklungskorb 8 ermöglicht eine hohe Lamellenzahl, so daß die auftretenden Stegspannungen in Grenzen gehalten werden können, auch bei Betrieb mit höherer Spannung.
Bei einer 4-poligen Ausführung des Statorringes müssen die Bürsten in einem rechten Winkel zueinander angeordnet sein.

An der offenen Seite des Kommutators 5 besitzen die Lamellen 6 Haken 18, die für das Anschließen der Schaltenden der Läuferwicklung 7 an den Kommutator 5 dienen. Auf der geschlossenen Seite des Läufers 4 befindet sich ein Isolierbund 19, der durch Anschlag an die Stirnwand 15 des Wicklungskorbes 8 den richtigen Abstand zur Einhaltung von Luft- und Kriechstrecken erzeugt, um die erforderliche Überschlag- und Kriechstromfestigkeit sicherzustellen, und gleichzeitig durch einen kegelstumpfförmigen Verlauf der Innenkontur für einen guten Lufteintritt in das Innere des Wicklungskorbes 8 bzw. in den Raum des Bürstensystems sorgt. Dabei ist der Außendurchmesser des Isolierbundes 19 Öffnungen 20 in der Stirnwand 15 für einen günstigen Luftdurchtritt angepaßt. Um den erforderlichen Luftstrom axial durch das Innere des Wicklungskorbes 8 zu bringen, ist der Luftspalt zwischen einem Isolierteil 21 der Kohlehalterung 11 durch schachtförmige Durchzüge 22 vergrößert. Das bürstenseitige Gehäuseteil bildet mit dem Isolierteil 21 der Kohlehalterung 11 eine Einheit und besitzt auf der zum Motorinneren gerichteten Stirnfläche 23, wie aus Fig. 2 erkennbar ist, Befestigungs-, Klemm- und Anschlagelemente für die Kohlebürsten 12, für Bürstenseile 24, Anschlußkontakte 25 sowie für die Bürstenfedern 13 und UKW-Drosseln 26. Dabei sind die UKW-Drosseln 26 in unmittelbarer Nähe der Kohlebürsten 12 mit extrem kurzer Leitungslänge angeordnet.
Die Fig. 2 zeigt einen Querschnitt im Bereich des Innenraumes des Wicklungskorbes 8.

Vorteilhafterweise ist eine Läuferstirnisolation 27, die in Fig. 3 und 3a als Einzelteil dargestellt ist und die auf der Stirnwand 15 der geschlossenen Wickelkorbseite sitzt, im Inneren eines Wickelkopfkranzes 28 als Lüfterrad 29 mit Lüfterflügeln 30 ausgebildet. Die Lüfterflügel 30 sind dabei so ausgebildet, daß sie durch eine Öffnung 31 des linken Gehäuseteils die Luft ansaugen und eine radiale Komponente des Luftstromes erzeugen, die entlang eines Bereiches einer nach innen gerichteten Stirnfläche 32 des linken Gehäuseteils nach außen gedrückt wird und an einer Innenzylinderfläche 33 in axialer Richtung umgelenkt wird und durch Lücken 34 zwischen den Statorwicklungen 3 und Öffnungen 35 im bürstenseitigen Gehäuseteil wieder nach außen gelangt. Die Wandung der Statorwicklungen 3 dichten dabei in Verbindung mit jeweils einem an den Gehäuseteilen angeordneten wulstförmigen Ringen 36 ab, wobei der an dem linken Gehäuseteil angeordnete Ring an den Stellen der Lücken 34 unterbrochen ist. Im bürstenseitigen Gehäuseteil ist der wulstförmige Ring 36 nicht unterbrochen, so daß eine Fehlleitung des Luftstromes unterbunden wird. Die Ringe 36 erzeugen durch Drücken der Wandung der Statorwicklungen 3 nach außen bei der Montage ein Festsitzen der Statorwicklungen 3.

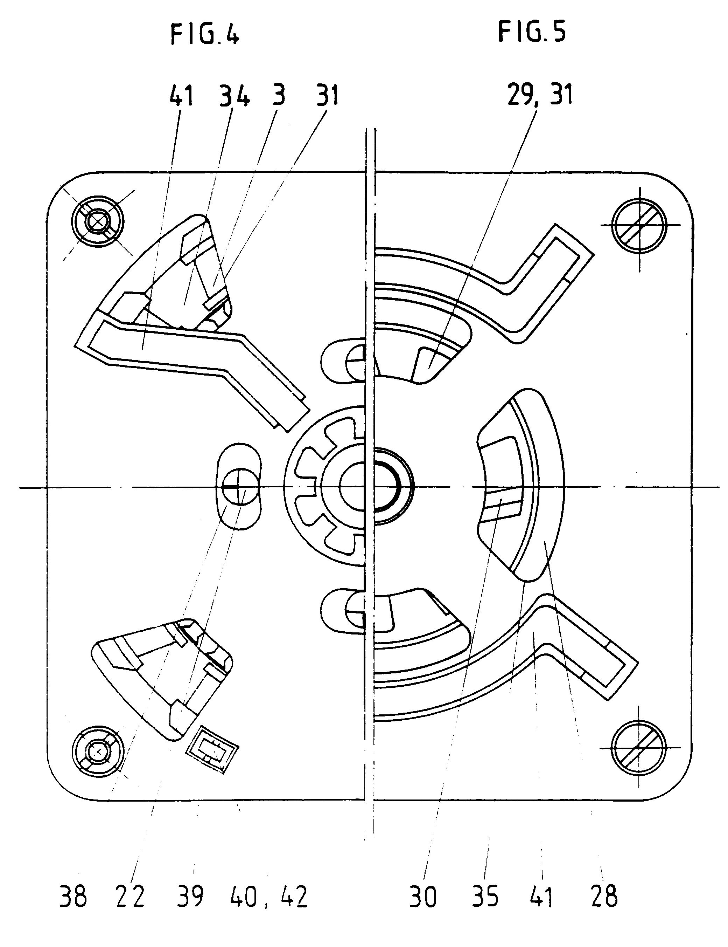

Gleichzeitig wird mit der Stellung der Lüfterflügel 30 eine axiale Komponente des Luftstromes erreicht, die durch am Fuß der Lüfterflügel 30 angeordnete Aussparungen 37 der Läuferstirnisolation 27 und den Öffnungen 20 in der Stirnwand 15 über die Wandung des als Kegelstumpf ausgebildeten Isolierbundes 19 des Kommutators 5 und durch die Durchzüge 22 im Isolierteil 21 des bürstenseitigen Gehäuseteils gedrückt wird und über trichterförmige Öffnungen 38 des bürstenseitigen Gehäuseteils, wie aus Fig. 4 ersichtlich, wieder nach außen gelangt.
Fig. 4 zeigt eine Teilansicht des Universalmotors bzw. des bürstenseitigen Gehäuseteils und Fig. 5 ebenso die des linken Gehäuseteils.

Die Wandung der Statorwicklungen 3 besitzt im Bereich der Anschlußstellen für die Erregerwicklung in axialer Richtung schornsteinförmige Vorsprünge 39, die durch die Wandungen der beiden Gehäuseteile hindurchragen nach außen ragen. Gleichzeitig befinden sich in den schornsteinförmigen Vorsprüngen 39 schachtförmige Einlassungen 40 zur Kontaktierung mit Schneidklemmenbuchsen. Die Schaltung des Motors nach der Montage erfolgt, in dem flachbandförmige Verbindungsstücke 41 an ihren Enden als Flachstecker ausgebildet sind und in die Einlassungen 40 bzw. Schneidklemmenbuchsen 42 gesteckt werden. Der Motoranschluß ist ebenfalls mit Flachsteckern ausgeführt, die in die beiden nicht belegten Einlassungen 40 bzw. Schneidklemmenbuchsen 42 gesteckt werden.

Durch den raumnutzenden, der Kompaktbauweise sehr naheliegenden inneren Aufbau erreichen diese Motoren gegenüber herkömmlichen Lösungen einen höheren Ausnutzungsfaktor und ein wesentlich günstigeres Masse/Leistungsverhältnis. Auch ihre thermische Belastbarkeit ist durch die kurze axiale Kühlluftführung durch den Motor und durch die großen stirnseitigen Wärmeabstrahlungsflächen wesentlich günstiger. Da sie aufgrund ihrer äußeren Form stets vielpolig (Polpaarzahl > 1) angefertigt werden, erreichen sie fast optimale magnetische Nutz-Streuflußverhältnisse. Das hat eine größere Drehmomententwicklung, insbesonder beim Anzugsmoment gegenüber vergleichbaren Motoren mit herkömmlichen Abmessungsverhältnissen zur Folge.

Der Einsatz solcher Motoren kann bevorzugt in Heimgeräten erfolgen, weil sich ihre äußeren Abmessungen gut der Geometrie der Geräte anpassen und in ihrem Leistungsvermögen sowie ihrem Betriebsverhalten insgesamt den gestellten Anforderungen entsprechen.

## Patentansprüche

1. Elektrischer Universalmotor für beliebige Antriebe, insbesondere Heimwerkzeuge, Küchengeräte usw. mit Statorring (2) und Statorwicklungen (3), drehbar gelagertem Läufer (4) mit Kommutator (6), Kohlebürsten (12) und Kohlehalterungen (11) in einem im Inneren des Läufers (4) gebildeten Hohlraum sowie einer beidseitigen Lagerung in einem geteilten Gehäuse (9), wobei der Läufer (4) schwungradartig ausgebildet ist, dadurch gekennzeichnet, daß der Läufer (4) einen napfförmigen Wicklungskorb (8) aufweist, der eine Vielzahl von Läuferwicklungen (7) trägt, und einen im Innenraum des Wicklungskorbes (8) angeordneten Kommutator (5) aufweist, dessen Lamellen (6) in axialer Richtung verlaufen und symmetrisch am Innenumfang liegen und an der offenen Seite des Innenraumes Haken (18) für die Verschalt- und Anschlußtechnik der Läuferwicklungen besitzen und von radial nach außen belasteten Kohlebürsten (12) bestromt werden, die einen Bürstendruck erzeugen, der radial nach außen gerichtet ist.

2. Universalmotor nach Anspruch 1, dadurch gekennzeichnet, daß der Wicklungskorb (8) in seiner Stirnwand (14) lüfterradförmig ausgebildet ist.

3. Universalmotor nach einem der vorstehenden Ansprüche, dadurch gekennzeichnet, daß die Wicklungen (3) des Statorringes (2) gegenüber dem Wicklungskorb (8) des Läufers (4) durch auf die Statorkerne aufgeschobene Abdeckfolien (16) geschützt sind, wobei diese durch die Statorkerne gesteckte Stifte (17) gesichert sind.

4. Universalmotor nach einem der vorstehenden Ansprüche, dadurch gekennzeichnet, daß ein den Haken (18) gegenüberliegender Isolierbund (19) des Kommutators (5) durch Anschlag an eine Stirnwand (15) des Wicklungskorbes (8) den richtigen Abstand zur Einhaltung von Luft- und Kriechstrecken erzeugt.

5. Universalmotor nach Anspruch 4, dadurch gekennzeichnet, daß der Isolierbund (19) einen kegelstumpfförmigen Verlauf seiner Innenkontur für einen guten Lufteintritt in den Innenraum des Wicklungskorbes (8) aufweist.

6. Universalmotor nach einem der vorstehenden Ansprüche, dadurch gekennzeichnet, daß das bürstenseitige Gehäuseteil mit einem Isolierteil (21) dei Kohlehalterung (11) eine Einheit bildet und Befestigungs-, Klemm- und Anschlagelemente für die Kohlebürsten (12), Bürstenseile (24), Anschlußkontakte (25) und die Kohlenbürsten (12) belastenden Biegefedern (13) sowie für UKW-Drosseln (26) aufweist.

7. Universalmotor nach Anspruch 6, dadurch gekennzeichnet, daß die UKW-Entstördrosseln (26) in Reihe zum Läufer (4) geschaltet und in unmittelbarer Nähe der Kohlebürsten (12) mit extrem kurzer Lcitungslänge angeordnet sind.

8. Universalmotor nach einem der Ansprüche 2 bis 7, dadurch gekennzeichnet, daß eine an der Stirnfläche (15) des Wicklungskorbes (8) angeordnete Läuferstirnisolation (27) im Inneren eines bestehenden Wickelkopfkranzes (28) als Lüfterrad (29) mit Lüfterflügeln (30) ausgebildet ist.

9. Universalmotor nach Anspruch 8, dadurch gekennzeichnet, daß in der Stirnwand (15) jeweils am Fuß jedes Läuferflügels Aussparungen (37) vorhanden sind.

10. Universalmotor nach Anspruch 9, dadurch gekennzeichnet, daß zur Abführung der Luft im Gehäuseteil mit Kohlehalterung im Maßbereich des Kommutatordurchmessers schachtförmige Durchzüge (22) angeordnet sind.

11. Universalmotor nach Anspruch 10, dadurch gekennzeichnet, daß die Wandung der Statorwicklungen (3) mit den beiden Gehäuseteilen und dem Statorring (2) nach außen eine Abdichtung bilden und daß zwischen den Statorwicklungen (3) Lücken (34) für die Führung des Luftstromes bestehen.

12. Universalmotor nach Anspruch 11, dadurch gekennzeichnet, daß wulstförmige Ringe (36), die jeweils an den Gehäuseteilen (9) angeordnet sind, mit den Wandungen der Statorwicklungen (3) zusammenwirken und dadurch abdichten und gleichzeitig die Statorwicklungen (3) nach außen drücken.

13. Universalmotor nach einem der vorstehenden Ansprüche, dadurch gekennzeichnet, daß in der Wandung der Statorwicklungen (3) an den Anschlußstellen für die Wicklungen schornsteinförmige Vorsprünge (39) in axialer Richtung vorhanden sind, die durch die Gehäusewandungen hindurchragen und schachtförmige Einlassungen (40) für eine Kontaktierung mit Schneidklemmenbuchsen aufweisen.

14. Universalmotor nach Anspruch 13, dadurch gekennzeichnet, daß die Schaltung des Motors nach der Montage durch flachbandförmige Verbindungsstücke (41) erfolgt, die an ihren Enden als Flachstecker ausgebildet sind und in die Einlassungen (40) bzw. Schneidklemmenbuchsen gesteckt werden.

15. Universalmotor nach Anspruch 14, dadurch gekennzeichnet, daß der Motoranschluß ebenfalls über Flachstecker erfolgt.

## Claims

1. Electric universal motor for any drive, in particular for D.I.Y. tools, kitchen appliances etc., comprising a stator ring (2) and stator windings (3), a rotatably mounted rotor (4) with a commutator (5), carbon brushes (12) and carbon mountings (11) in a cavity formed inside the rotor (4), and comprising bilateral mounting in a split housing (9); the rotor (4) being formed as a flywheel, characterised in that the rotor (4) has a bowl-like winding cage (8) carrying a large number of rotor windings (7) and has a commutator (5), which is disposed inside the winding cage (8) and whose blades (6) extend in the axial direction, lie symmetrically along the inner circumference, and have on the open side of the interior hooks (18) for wiring and connecting the rotor windings and are supplied with current by carbon brushes (12) stressed radially outward so as to generate a brush pressure which is oriented radially outwards.

2. Universal motor according to claim 1, characterised in that the winding cage (8) is formed as a fan wheel at its end wall (14).

3. Universal motor according to one of the preceding claims, characterised in that the windings (3) of the stator ring (2) are protected from the winding cage (8) of the rotor (4) by cover films (16) pulled over the stator cores and fixed by pins (14) penetrating the stator cores.

4. Universal motor according to one of the preceding claims, characterised in that an insulating collar (19) of the commutator (5) opposing the hooks (18), by stopping against an end wall (15) of the winding cage (8), produces the correct amount of clearance to allow for air movement and creep.

5. Universal motor according to claim 4, characterised in that the contour of the insulating collar (19) follows a frustoconical path to allow good air admission to the interior of the winding cage (8).

6. Universal motor according to one of the preceding claims, characterised in that the housing part on the brush side forms a unit together with an insulating part (21) of the carbon mounting (11) and has fixing, gripping and stop elements for the carbon brushes (12), brush cables (24), terminal-contacts (25) and spiral springs (13) for stressing the carbon brushes (12) and for VHF chokes (26).

7. Universal motor according to claim 6, characterised in that the interference-suppressing VHF chokes (26) are connected in series with the rotor (4) and are disposed immediately next to the carbon brushes (12) with an extremely short lead length.

8. Universal motor according to one of claims 2 to 7, characterised in that a rotor end insulation (27) disposed on the end face (15) of the winding cage (8) is formed inside an existing end windings ring (28) as a fan wheel (29) with fan blades (30).

9. Universal motor according to claim 8, characterised in that recesses (37) are provided in the end wall (15) at the base of each rotor blade.

10. Universal motor according to claim 9, characterised in that in order to discharge the air in the housing part with the carbon mounting, shaft-like vents (22) are disposed in the measuring region of the commutator diameter.

11. Universal motor according to claim 10, characterised in that the wall of the stator windings (3) together with the two housing parts and the stator ring (2) form a seal with respect to the exterior, and in that gaps (34) are provided between the stator windings (3) for the passage of the air stream.

12. Universal motor according to claim 11, characterised in that bead-like rings (36) disposed on respective housing parts cooperate with the walls of the stator windings (3) and thereby seal and simultaneously press the stator windings (3) outward.

13. Universal motor according to one of the preceding claims, characterised in that, in the wall of the stator windings (3) at the terminal positions for the windings, chimney-like projections (39) are provided in the axial direction, which project through the housing wall and have shaft-like recesses (40) for contact-making with cutting terminal bushes.

14. Universal motor according to claim 13, characterised in that switching of the motor after assembly is effected by connecting members (41) in the form of flat strips, which are formed as flat plugs at their ends and are inserted into the recesses (40) or cutting terminal bushes.

15. Universal motor according to claim 14, characterised in that the motor is also connected via flat plugs.

## Revendications

1. Moteur électrique universel pour entraînements quelconques, en particulier outils domestiques, ustensiles de cuisine, etc., comportant un anneau statorique (2) et des enroulements statoriques (3), un rotor monté tournant (4) avec collecteur (5), balais en charbon (12) et porte-balais (11) dans une cavité formée à l'intérieur du rotor (4), ainsi qu'un palier de chaque côté dans une carcasse divisée (9), le rotor (9) étant du genre volant, caractérisé en ce que le rotor (4) présente un panier à enroulements (8) en forme d'écuelle qui porte un grand nombre d'enroulements rotoriques (7), et présente un collecteur (5) placé à l'intérieur du panier à enroulements (8) et dont les lames (6) s'étendent dans la direction axiale, sont placées symétriquement sur le pourtour intérieur, comportent sur le côté ouvert de l'intérieur du panier des crochets (18) pour la technique de connexion et de raccordement des enroulements rotoriques et sont alimentées par des balais en charbon (12) chargés radialement vers l'extérieur qui produisent une pression dirigée radialement vers l'extérieur.

2. Moteur universel selon la revendication 1, caractérisé en ce que le panier à enroulements (8) est, dans sa paroi frontale (14), en forme de roue de ventilateur.

3. Moteur universel selon l'une des revendications précédentes, caractérisé en ce que les enroulements (3) de l'anneau statorique (2) sont protégés du panier à enroulements (8) du rotor (4) par des feuilles de couverture (16) glissées sur les noyaux statoriques qui sont arrêtées par des goupilles (17) fichées dans ces noyaux.

4. Moteur universel selon l'une des revendications précédentes, caractérisé en ce qu'une collerette isolante (19) du collecteur (5) située en face des crochets (18) produit par butée contre une paroi frontale (15) du panier à enroulements (8) la distance correcte pour l'observation des distances dans l'air et des lignes de fuite.

5. Moteur universel selon la revendication 4, caractérisé en ce que la collerette isolante (19) présente un contour intérieur tronconique pour une bonne entrée d'air à l'intérieur du panier à enroulements (8).

6. Moteur universel selon l'une des revendications précédentes, caractérisé en ce que la partie côté balais de la carcasse fait bloc avec une partie isolante (21) du porte-balais (11) et présente des éléments de fixation, de serrage et de butée pour les balais en charbon (12), des câbles de balais (24), des contacts de raccordement (25), des ressorts de flexion (13) chargeant les balais en charbon (12) et des bobines d'arrêt VHF (26).

7. Moteur universel selon la revendication 6, caractérisé en ce que les bobines antiparasites VHF (26) sont montées en série avec le rotor (4) et placées à proximité immédiate des balais en charbon (12) avec une longueur de conducteurs extrêmement courte.

8. Moteur universel selon l'une des revendications 2 à 7, caractérisé en ce qu'une isolation frontale de rotor (27) placée sur la face frontale (15) du panier à enroulements (8) est réalisée à l'intérieur d'une couronne de tête d'enroulement existante (28) sous forme de roue de ventilateur (29) à ailettes (30).

9. Moteur universel selon la revendication 8, caractérisé en ce qu'un évidement (37) existe dans la paroi frontale (15) au pied de chaque ailette de ventilateur.

10. Moteur universel selon la revendication 9, caractérisé en ce que des passages en forme de puits (22) pour l'évacuation de l'air sont faits à la mesure du diamètre du collecteur dans la partie de la carcasse qui comporte le porte-balais.

11. Moteur universel selon la revendication 10, caractérisé en ce que la paroi des enroulements statoriques (3) réalise une étanchéité vers l'extérieur avec les deux parties de la carcasse et l'anneau statorique (2) et qu'entre les enroulements statoriques (3) existent des vides (34) pour le passage du courant d'air.

12. Moteur universel selon la revendication 11, caractérisé en ce que des anneaux en forme de bourrelet (36) placés chacun sur une partie de la carcasse (9) coopèrent avec les parois des enroulements statoriques (3) et ainsi assurent l'étanchéité et en même temps poussent vers l'extérieur les enroulements statoriques (3).

13. Moteur universel selon l'une des revendications précédentes, caractérisé en ce que dans la paroi des enroulements statoriques (3) existent dans la direction axiale aux points de raccordement des enroulements des saillies en forme de cheminée (39) qui traversent les parois de la carcasse et présentent des entrées en forme de puits (40) pour une mise en contact avec des douilles de bornes coupantes.

14. Moteur universel selon la revendication 13, caractérisé en ce que la connexion du moteur après le montage est faite au moyen de pièces de liaison en forme de bande plate (41) qui, à leurs extrémités, forment des fiches plates et sont enfichées dans les entrées (40) ou les douilles de bornes coupantes.

15. Moteur universel selon la revendication 14, caractérisé en ce que le raccordement du moteur se fait également par fiches plates.
